# EUROPÄISCHE PATENTANMELDUNG

(11) **EP 0 564 927 A1**
(43) Veröffentlichungstag der Anmeldung: **13.10.1993**
(21) Anmeldenummer: 93105067.8
(22) Anmeldetag: 26.03.1993
(51) Int. Cl.: G06K 19/067, G06K 7/10

(54) **Hermetisch abgeschlossene, temperaturbeständige Datenspeichervorrichtung**

(30) Priorität: 10.04.1992 DE 9205049 U
(71) Anmelder: SIEMENS AKTIENGESELLSCHAFT, D-80333 München (DE)
(72) Erfinder: Janus, Kurt, Dipl.-Ing. (FH), W-8504 Stein (DE); Müller, Klaus, W-8520 Erlangen (DE); Pickelmann, Gerhard, Dipl.-Ing. (FH), W-8520 Erlangen (DE)

(57) **Zusammenfassung**

Die Vorrichtung weist ein Gehäuse (G1,G2) aus temperaturbeständigem Material auf, bevorzugt aus Polyphenylensulfid, welches hermetisch abgeschlossen ist. Dieses hat bevorzugt eine zylindrische Form aus zwei annäherend formgleichen Schalen (G1,G2). Es ist nahezu vollständig ausgefüllt mit einer Packung von mindestens drei übereinander liegenden Formlingen (D1,RS,D2) aus Wärmedämmstoff mit bevorzugt mikroporöser Struktur und pyrogener Kieselsäure als ein Hautbestandteil. Der innen liegende, bevorzugt die Gestalt einer Ringscheibe aufweisende Formling (RS) besitzt annähernd im Zentrum einen Hohlraum (SF), in dem zumindest ein Datenspeicherelement (LP) eingelegt ist. Die außen liegenden, bevorzugt die Gestalt von vollen Deckscheiben aufweisenden Formlinge (D1,D2) decken den innen liegenden Formling und den Hohlraum (SF) vollständig ab. Eine Sende- und/oder Empfangseinrichtung (A) zur drahtlosen Übertragung von Daten ist zwischen einer Innenseite des Gehäuses und einer Außenseite der Packung der Formlinge eingelegt, und elektrisch mit dem Datenspeicherelement (LP) verbunden (L1,L2).

## Beschreibung

Die Erfindung betrifft eine Datenspeichervorrichtung.

Komponenten, Geräte und Systeme zur Speicherung von Daten sind manchmal für einen mobilen Einsatz ausgelegt. Eine Voraussetzung für die Ortsungebundenheit ist das Fehlen von starren Kabelverbindungen. Zur Energieversorgung und insbesondere zum Datenaustausch verfügen derartige Geräte über kabellos arbeitende Mittel.

So können beispielhaft sogenannte "mobile Datenspeicher", z.B. als Bestandteil eines Identifikationssystemes in einer vollautomatisch betriebenen Fertigungsanlage zur Kennzeichnung von Werkstücken unterschiedlichster Art dienen. Jedes der Werkstücke wird dabei mit einem mobilen Datenspeicher versehen. Beim Durchlauf des Werkstückes durch die vollautomatische Fertigung wird zum einen den einzelnen Fertigungsstationen vor Beginn der Bearbeitung die Art und der aktuelle Zustand des zu bearbeitenden Werkstückes mitgeteilt. Zum anderen wird nach erfolgter Bearbeitung der erreichte Werkstückzustand von der Fertigungsstation in den mobilen Datenspeicher des Werkstückes eingeschrieben, und somit dessen Datensatz aktualisiert. Ein das Werkstück auf seinem Weg durch die vollautomatische Fertigung begleitender mobiler Datenspeicher ermöglicht somit zu jedem Zeitpunkt und an jeder Stelle des Fertigungsprozesses eine sichere Identifikation des Werkstückes und eine aktuelle Information über dessen Bearbeitungszustand.

Durchlaufen somit mobile Datenspeicher z.B. im "Huckepack" auf bzw. an jedem Werkstück eine gesamte Fertigungsanlage, so sind sie nahezu in der gleichen Weise wie das Werkstück den bei jeder Fertigungsstation vorliegenden Umgebungsbedingungen ausgesetzt. So stellen insbesondere Feuchtigkeit, Chemikalien und hohe Temperaturen große Belastungen für eine Datenspeichervorrichtung dar.

Bildet z.B. ein herzustellendes Kraftfahrzeug ein derartiges "Werkstück", so können in einem zugeordneten, mobilen Datenspeicher alle Informationen hinterlegt werden, welche gebraucht werden, um das Fahrzeug bevorzugt vollautomatisch mit allen kundenindividuellen Besonderheiten, z.B. in Bezug auf Karosserieform, Motorisierung, Außenfarbe und Ausstattung herzustellen. In einem solchen Fall kann der mobile Datenspeicher bereits alle bei der Karosserieerstellung notwendigen Fertigungsschritte mitdurchlaufen, insbesondere vollautomatische Schweiß-, Lackier- und Montageanlagen. Insbesondere bei der Lackierung von Karosserien herrschen Umgebungsbedingungen, die den ordnungsgemäßen Betrieb einer Datenspeichervorrichtung beeinträchtigen können. So ist der Datenspeicher bei den einzelnen Lackierphasen der Karosserie nicht nur zumindest einem Lack- und Lösungsmittelnebel ausgesetzt. Vielmehr wird diese in anschließenden Trockenöfen mit Umgebungstemperaturen belastet, welche zumindest kurzzeitig die Höhe von mehreren 100° C annehmen können.

Der Erfindung liegt die Aufgabe zugrunde eine mobile Datenspeichervorrichtung anzugeben, welche zumindest hitzefest ist, und somit ohne Beeinträchtigung von deren Funktion zumindest kurzzeitig besonders hohen Umgebungstemperaturen von bis zu mehreren 100° C, insbesondere im Inneren von vollautomatischen Fertigungsanlagen, ausgesetzt werden kann.

Die Aufgabe wird gelöst mit der im Anspruch 1 angegebenen Datenspeichervorrichtung. Vorteilhafte weitere Ausgestaltungen der Erfindung sind in den Unteransprüchen angegeben.

Die erfindungsgemäße Datenspeichervorrichtung weist zumindest ein elektronisches Datenspeicherelement und eine Sende- und/oder Empfangseinrichtung zur drahtlosen Übertragung von Daten zu dem und/oder aus dem Datenspeicherelement auf. Bei dem Datenspeicherelement handelt es sich bevorzugt um zumindest einen, allgemein handelsüblichen elektronischen Speicherbaustein. Je nach Ausführung können dabei die Daten aus dem Speicherelement nur "ausgelesen" werden, bzw. u.U. durch partielles oder vollständiges "Einlesen" auch aktualisiert werden. Das elektronische Datenspeicherelement kann auch in Form eines sogenannten Hybrides aufgebaut sein, welches bevorzugt auf einer miniaturisierten Leiterplatte neben den eigentlichen Speicherbausteinen u.U. auch weitere, z.B. prozessorgeführte Bauelemente zur Datenverarbeitung aufweist. Derartige Elemente werden gegebenenfalls dazu benötigt, um die Daten zum Zwecke der drahtlosen Übertragung in geeigneter Weise aufzubereiten.

Die zum "Auslesen" bzw. "Einschreiben" von Daten benötigte Energie wird in der Regel über die Sende- und/oder Empfangseinrichtung drahtlos von außen eingekoppelt. Handelt es sich bei dem Datenspeicherelement beispielsweise um einen üblichen EPROM, so muß zur Pufferung der Daten eine Langzeitbatterie vorhanden sein, während z.B. ein EEPROM als Datenspeicherelement ohne Stützbatterie auskommt.

Erfindungsgemäß weist die Datenspeichervorrichtung ein Gehäuse aus temperaturbeständigem Material auf. Dieses ist hermetisch abgeschlossen und nahezu vollständig ausgefüllt mit einer Packung von mindestens drei übereinander liegenden Formlingen aus Wärmedämmstoff. Dabei weist der innen liegende Formling annähernd im Zentrum einen als eine Art "Schaltungsfach" dienenden Hohlraum auf, in den zumindest das elektronische Datenspeicherelement und eine gegebenenfalls vorhandene Langzeitbatterie eingelegt sind. Erfindungsgemäß decken die außen liegenden Formlinge den innen liegenden Formling und den Hohlraum beidseitig vollständig ab. Durch diese Anordnung wird eine gute Wärmeabschirmung der im Hohlraum befindlichen elektrischen und elektronischen Bauelemente erreicht. Schließlich ist erfindungsgemäß die Sende- und/oder Empfangseinrichtung zwischen einer Innenseite des Gehäuses und einer Außenseite der Packung aus den übereinander liegenden Formlingen eingelegt, und elektrisch mit dem Datenspeicherelement verbunden.

Der erfindungsgemäße Aufbau der Datenspeichervorrichtung hat den besonderen Vorteil, daß der zur Aufnahme zumindest eines empfindlichen elektronischen Datenspeicherelementes dienende Hohlraum im Inneren der Packung der übereinander liegenden Formlinge gut gegen eindringende Wärme isoliert ist. Die Gesamtlebensdauer der Vorrichtung wird somit nicht mehr bestimmt durch eine möglicherweise beschränkte Temperaturfestigkeit des elektronischen Datenspeicherelementes.

Vielmehr entspricht die gesamte nutzbare Einsatzdauer der erfindungsgemäßen Datenspeichervorrichtung vollständig der vorab annähernd festliegenden Lebensdauer einer eventuell zur Datenpufferung benötigten Langzeitbatterie. Aufgrund der guten Temperaturisolierung des Hohlraumes im innen liegenden Formling tritt in einem solchen Fall keine Lebensdauereinschränkung der Batterie durch gesteigerte Selbstentladung wegen überhöhter Innentemperatur auf. Bei Einsatz von hochwertigen Dauerbatterien können Einsatzdauern von fünf bis acht Jahren erreicht werden. Derartig lange Nutzungsdauern bieten den weiteren Vorteil, daß es bei einer Erschöpfung der Kapazität der eventuell vorhandenen Langzeitbatterie aus betriebswirtschaftlichen Gründen nicht mehr notwendig ist, die Batterie zu erneuern und die Datenspeichervorrichtung einer erneuten Nutzung zuzuführen. Vielmehr kann der Einsatz der gesamten Datenspeichervorrichtung mit Erreichen des Endes der Lebensdauer einer internen Langzeitbatterie abgeschlossen werden. Es entfallen somit kostenaufwendige Instandsetzungsarbeiten an der Datenspeichervorrichtung, welche z.B. zum Batterieaustausch geöffnet und anschließend wieder hermetisch dicht abgeschlossen werden müßte. Die Datenspeichervorrichtung kann in jedem Fall ungeöffnet entsorgt werden.

Bei der Datenspeichervorrichtung sind erfindungsgemäß nur diejenigen Teile der Einwirkung von u.U. recht hohen Umgebungstemperaturen ausgesetzt, welche diese ohne Beeinträchtigung von deren Funktion auch über längere Zeiträume aushalten. Dies trifft insbesondere auf die Sende- und/oder Empfangseinrichtung zu, welche zwischen einer Innenseite des Gehäuses und einer Außenseite der Packung aus den übereinander liegenden Formlingen eingelegt ist. Von den hitzeempfindlichen Elementen der Datenspeichervorrichtung sind somit erfindungsgemäß das elektronische Datenspeicherelement und gegebenenfalls eine Langzeitbatterie im Inneren der wärmeabschirmenden Packung der übereinander liegenden Formlinge aus Wärmedämmstoff angeordnet, während die Sende- und/oder Empfangseinrichtung zur drahtlosen Übertragung von Daten zu externen, bevorzugt ortsfesten Empfangs- und Sendeeinrichtungen lediglich gegen äußere mechanische Einwirkungen geschützt in den Zwischenraum zwischen Gehäuseinnenseite und Packungsaußenseite eingelegt ist. Dies hat den Vorteil, daß die erfindungsgemäße Datenspeichervorrichtung sowohl über eine gute Hitzefestigkeit, als auch eine große Empfangs- und Sendereichweite zur drahtlosen Übertragung von Daten verfügt.

Schließlich zeichnet sich die erfindungsgemäße Vorrichtung durch einen einfachen und somit kostengünstig herzustellenden Aufbau aus. So können nicht nur die aus Wärmedämmstoff bestehenden Formlinge einfach und kostengünstig vorgefertigt werden. Vielmehr ist eine einfache und schnelle Gesamtmontage aller elektrischen und elektronischen Elemente der Datenspeichervorrichtung unter Zuhilfenahme der Formlinge als Tragelemente außerhalb des Gehäuses möglich. Erst nach vollständiger mechanischer und elektrischer Montage wird die Packung aus den zumindest drei übereinander liegenden Formlingen komplett mit innen liegendem Datenspeicherelement und eventuell vorhandener Langzeitbatterie, und außen aufliegender verdrahteter Sende- und/oder Empfangseinrichtung in das Gehäuse eingeführt, und dieses hermetisch dicht abgeschlossen. Hierdurch entfallen aufwendige Montagearbeiten im Inneren des Gehäuses.

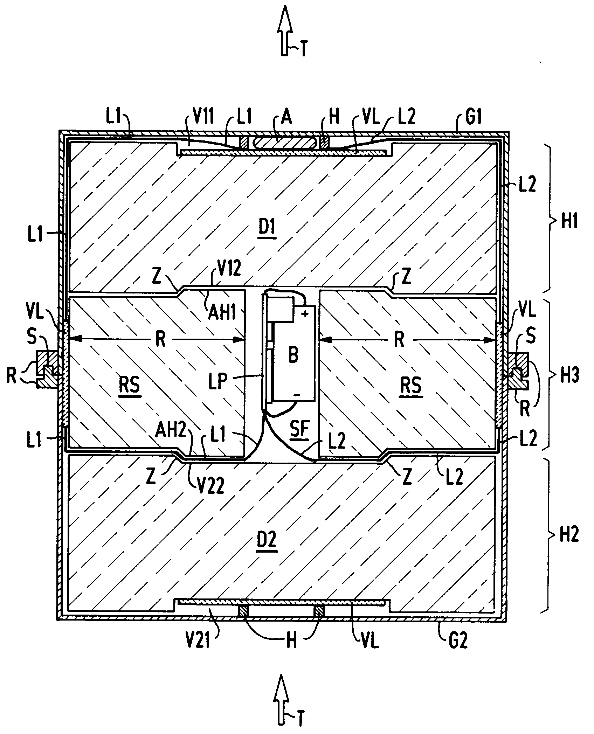

Die Erfindung und weitere vorteilhafte Ausführungformen derselben werden desweiteren anhand eines in der Figur dargestellen bevorzugten Ausführungsbeispieles näher erläutert.

Das im Beispiel der Figur dargestellte Gehäuse ist erfindungsgemäß nahezu vollständig mit einer Packung von bevorzugt drei übereinander liegenden und aus Wärmedämmstoff bestehenden Formlingen D1,RS,D2 ausgefüllt. Der innen liegende Formling RS weist dabei annähernd im Zentrum einen Hohlraum SF auf, in den zumindest das elektronische Datenspeicherelement LP und eine dazugehörige Langzeitbatterie B zur Datenpufferung eingelegt sind. Die außen liegenden Formlinge D1, D2 decken den innen liegenden Formling RS und den annähernd im Zentrum befindlichen Hohlraum SF beidseitig vollständig ab. Eine derartige Packung stellt einen einfach aufgebauten und äußerst wirksamen Wärmeschutz für die wärmeempfindlichen Bauelemente im Hohlraum SF dar. Bei einer anderen, nicht dargestellten Ausführungsform können insbesondere die außen liegenden Formlinge auch aus mehreren, übereinander liegenden einzelnen Scheiben bestehen.

Ferner ist die Sende- und/oder Empfangseinrichtung A zwischen einer Innenseite des in der Figur dargestellten Gehäuses und einer Außenseite der Packung aus den übereinander liegenden Formlingen D1,RS,D2 eingelegt und bevorzugt über Leitungen L1,L2 mit dem elektronischen Datenspeicherelement LP im Inneren des Hohlraumes SF elektrisch leitend verbunden.

Gemäß einer weiteren, in der Figur bereits dargestellten Ausführungsform besteht das Gehäuse der Datenspeichervorrichtung aus zwei annäherend formgleichen Schalen G1,G2, welche aufeinander liegen und unlösbar hermetisch dicht miteinander verbunden sind. Bevorzugt weisen diese "Gehäusetöpfe" G1,G2 an den jeweiligen Öffnungsseiten überstehende Ränder R auf, welche zum hermetischen Verschluß unlösbar miteinander verbunden sind. Bei dem in der Figur dargestellten Beispiel weist hierzu der Rand der unteren Schale G2 einen das gesamte Gehäuse umlaufenden Steg S auf. Dieser kann hermetisch dicht in eine Nut eingepreßt werden, welche gegenüberliegend in dem überstehenden Rand der oberen Schale G1 angebracht ist. Durch z.B. Verquetschung, Verschweißung bzw. Verklebung derart ausgebildeter Ränder können die aufeinander liegenden Gehäuseschalen G1, G2 hermetisch dicht und unlösbar miteinander verbunden werden.

Bevorzugt besteht das Gehäuse aus einem weitgehend lösungsmittelbeständigen und bis zu einer Temperatur von ca. 230° C formbeständigen Kunststoff. Besonders geeignet hierfür ist Polyphenylensulfid ("PPS"). Gemäß einer weiteren, bevorzugten Auführungsform der Erfindung weist der Wärmedämmstoff der Formlinge D1,RS,D2 eine mikroporöse Struktur auf und enthält als einen Hauptbestandteil pyrogene Kieselsäure ("HDK"). Ein derartiger Wärmedämmstoff weist im Vergleich zu herkömmlichen Wärmedämmstoffen wie z.B. Steinwolle, Keramik, Glasfasern bzw. Calcium-Silikat eine wesentlich bessere Wärmedämmwirkung auf.

Bei einer weiteren, in der Figur ebenfalls bereits dargestellten, bevorzugten Ausführungsform weist das Gehäuse der Datenspeichervorrichtung eine zylindrische Form auf. In diesem Fall haben die außen liegenden Formlinge D1,D2 die Gestalt von zylindrischen, vollen Deckscheiben, und der innen liegende Formling RS die Gestalt einer Ringscheibe, deren im Zentrum liegende Ringöffnung bevorzugt als ein Durchbruch den Hohlraum zum Einlegen zumindest des elektronischen Datenspeicherelementes LP und eventuell einer Langzeitbatterie B bilden. Bevorzugt weisen in diesem Fall die Höhen H1,H2 der außen liegenden Deckscheiben D1,D2 und die Höhe H3 der innen liegenden Ringscheibe RS annäherend gleiche Werte auf. Weist zudem die Ringscheibe des innen liegenden Formlinges RS eine radiale Stärke R auf, deren Wert ebenfalls annähernd den Höhen H1,H2,H3 entspricht, so sind das temperaturempfindliche Datenspeicherelement LP und die Langzeitbatterie B im Hohlraum SF im Inneren der zylindrischen Packung in alle Raumrichtungen nahezu gleichmäßig von Wärmedämmstoff umgeben.

Das Gehäuse der Datenspeichervorrichtung könnte unter voller Anwendung des der Erfindung zugrundeliegenden Prinzips auch kugelförmig ausgeführt sein. In einem solchen Fall hätte der innen liegende Formling RS die Gestalt eines torusähnlichen Tonnenkörpers mit einem bevorzugt axialsymmetrischen Durchbruch, während die außen liegenden Formlinge die Gestalt von Kugelabschnitten bzw. Kugelschichten aufweisen würden. Hierbei wäre der Hohlraum SF im Inneren des Gehäuses rundum nahezu ideal gleichmäßig von Wärmedämmstoff gleicher Stärke umgeben.

Demgegenüber stellt die in der Figur dargestellte, zylindrische Form der Datenspeichervorrichtung einen ausgewogenen Kompromiß dar zwischen einer annäherend gleichmäßigen, allseitigen Umfassung des Hohlraumes mit Wärmedämmstoff und einer kostengünstig herzustellenden, montagefreundlichen Gesamtform.

Gemäß einer weiteren, in der Figur ebenfalls bereits dargestellten bevorzugten Ausführungsform weisen die Formlinge bevorzugte ringförmige Erhöhungen und Vertiefungen auf, welche bei der übereinander liegenden Anordnung in der Packung derart ineinander greifen, daß sich sogenannte "Verzahnungsbereiche" Z bilden. So weist die Ringscheibe des innen liegenden Formlinges RS auf beiden Seiten eine bevorzugt ringförmige Erhöhung AH1, AH2 auf. Entsprechend weisen die Deckscheiben der außen liegenden Formlinge D1,D2 auf den Oberseiten, welche dem innen liegenden Formling RS zugewandt sind, bevorzugt formgleiche, ringförmige Vertiefungen V12, V22 auf. Liegen nun die Formlinge in der Packung übereinander, so greifen bei dem in der Figur dargestellten Beispiel die Erhöhungen AH1 bzw. AH2 des innen liegenden Formlinges RS möglichst formschlüssig in die gegenüberliegenden Vertiefungen V12 bzw. V22 in den zugewandten Oberseiten der außen liegenden Formlinge D1, D2 ein. Hierdurch werden sogenannte "Verzahnungsbereiche" zwischen den Auflageseiten der Formlinge in der Packung gebildet. Diese dienen zum Verschluß der Wärmekanäle, welche sich im Zwischenraum der Auflageseiten der Formlinge ergeben. Diese im Beispiel der Figur kreisförmigen Auflageflächen stellen Isolierungsschwachstellen dar, welche durch ineinandergreifende, Verzahnungsbereiche bildende Erhöhungen und Vertiefungen auf diesen Oberseiten verschlossen werden. Die "Verzahnungswirkung" kann noch erhöht werden, wenn die bevorzugt ringförmigen Erhöhungen und Vertiefungen auf den Oberseiten an den Kanten leicht konisch sind. Es stellt sich dann eine die Isolierwirkung begünstigende Verklemmung zwischen den Erhöhungen und Vertiefungen V12,AH1 und V22,AH2 in den bevorzugt ringförmigen Verzahnungsbereichen Z zwischen den Formlingen D1,RS und D2,RS der Packung ein.

Gemäß einer weiteren, vorteilhaften Ausführungsform ist die Sende- und/oder Empfangseinrichtung A im Bereich von zumindest einer kreisförmigen Stirnseite in das zylinderförmige Gehäuse eingelegt. Bei dem in der Figur dargestellten Beispiel ist die antennenartige Sende- und/oder Empfangseinrichtung A auf der Innenseite des Bodens der oberen Gehäuseschale G1 eingelegt. Bevorzugt sind dort Halteleisten H zur verrutschsicheren Fixierung angebracht. Aufgrund dieser Anordnung der Sende- und/oder Empfangseinrichtung A weist die Datenspeichervorrichtung eine bevorzugte Transport- bzw. Vorschubrichtung auf, welche im Beispiel der Figur durch einen Pfeil T dargestellt ist.

Bevorzugt weist in diesem Fall zumindest einer der außen liegenden Formlinge D1,D2 der Packung auf der Oberseite, welche dem innen liegenden Formling RS abgewandt ist, jeweils eine weitere, bevorzugt ebenfalls ringförmige Vertiefung zur Aufnahme der Sende- und/oder Empfangseinrichtung A auf. So verfügt bei dem in der Figur dargestellten Beispiel zumindest der obere Formling D1 über eine derartige Vertiefung V11, welche eine Art "Antennenfach" zur Aufnahme der Sende- und/oder Empfangseinrichtung A und eventuell vorhandener Halteleisten H auf der Bodeninnenseite der Gehäuseschale G1 bildet.

Zur Vereinfachung sind bei dem in der Figur dargestellten Beispiel beide Gehäuseschalen G1,G2 und beide außen liegende Formlinge D1,D2 nahezu vollständig formgleich ausgeführt. So weist auch der unten liegende Formling D2 im Inneren der unteren Gehäuseschale G2 eine bevorzugt ringförmige Vertiefung V21 auf. In diese ragen ebenfalls auf der Bodeninnenseite von G2 angebrachte Halteleisten H hinein. Im Beispiel der Figur ist dieses zweite "Antennenfach" auf der gegenüberliegenden Flachseite des zylindrischen Gehäuses nicht "belegt".

Bevorzugt ist die Sende- und/oder Empfangseinrichtung A als eine gewickelte Ferritantenne ausgeführt. Dabei ist bevorzugt ein ferrimagnetische Eigenschaften aufweisendes Drahtmaterial spulenartig um einen bevorzugt keramischen Kern gewickelt. Diese Anordnung ist als eine "Antenne" A zwischen den Halteleisten H im "Antennenfach" V11 gelagert. Die elektrischen Verbindungen L1,L2 zwischen der Sende- und/oder Empfangseinrichtung A und dem Datenspeicherelement LP sind schließlich bevorzugt zwischen den Innenseiten des Gehäuses und den Außenseiten der Packung der Formlinge D1,RS,D2, und zwischen den Auflageseiten von zumindest einem außen liegenden und einem innen liegenden Formling in der Packung verlegt. Bei dem in der Figur dargestellten Beispiel ist die Antenne A über die Verbindungsleitungen L1, L2 mit dem elektronischen Datenspeicherelement LP im Hohlraum SF verbunden. Die Leitungen laufen dabei zunächst um die Packung der übereinander liegenden Formlinge herum, und gelangen zwischen den Auflageseiten des unten liegenden Formlinges D2 und des innen liegenden Formlinges RS in das "Schaltungsfach". In einem anderen, in der Figur nicht dargestellten Beispiel können die Verbindungsleitungen L1, L2 auch zwischen den Auflageseiten des oben liegenden Formlinges D1 und dem innen liegenden Formling RS zum Hohlraum SF verlegt sein.

Die in der Figur dargestellte Datenspeichervorrichtung weist schließlich noch aus keramischem Material bestehende Vließe VL auf, welche an ausgewählten Stellen in den Hohlraum zwischen den Innenseiten des Gehäuses und den Außenseiten der Packung der übereinander liegenden Formlinge eingelegt sind. So sind beispielhaft die Vertiefungen V11,V21 auf den außen liegenden Oberseiten der Formlinge D1,D2 mit derartigen Vließen VL ausgelegt. Hierauf greifen die Haltestege H auf den Bodeninnenseiten der Gehäuseschalen G1,G2 pressend ein. Ferner ist der innen liegende Formling RS im Bereich der Stoßstelle der übereinander liegenden Gehäuseschalen G1,G2 ebenfalls mit einem Keramikvließ VL umgeben. Die eingelegten Vließe haben die Aufgabe, unvermeidbare Toleranzen in der äußeren Abmessung der Formlinge D1,RS,D2 auszugleichen, so daß eine verrutschsichere feste Lagerung der Packung der Formlinge im Inneren des hermetisch abgeschlossenen Gehäuses auch bei der Einwirkung von sehr hohen äußeren Temperaturen gewährleistet ist. Gegebenenfalls kann auch das vom Datenspeicherelement LP und der Batterie B nicht benötigte Volumen im Hohlraum SF mit derartigem Material ausgelegt sein.

## Patentansprüche

1. Datenspeichervorrichtung, zumindest aus einem elektronischen Datenspeicherelement (LP), einer Sende- und/oder Empfangseinrichtung (A,L1,L2) zur drahtlosen Übertragung von Daten zu dem und/oder aus dem Datenspeicherelement (LP) und gegebenenfalls einer Langzeitbatterie (B) zur Datenpufferung, mit
a) einem Gehäuse (G1,G2) aus temperaturbeständigem Material, welches hermetisch abgeschlossen ist (R,S), wobei
b) eine Packung von mindestens drei übereinander liegenden Formlingen (D1,RS,D2) aus Wärmedämmstoff das Gehäuse nahezu vollständig ausfüllt, und
b1) der innen liegende Formling (RS) annähernd im Zentrum einen Hohlraum (SF) aufweist, in den zumindest das elektronische Datenspeicherelement (LP) und gegebenenfalls die Langzeitbatterie (B) eingelegt sind, und
b2) die außen liegenden Formlinge (D1,D2) den innen liegenden Formling (RS) und den Hohlraum (SF) beidseitig vollständig abdecken, und
c) die Sende- und/oder Empfangseinrichtung (A,L1,L2) zwischen einer Innenseite des Gehäuses (G1,G2) und einer Außenseite der Packung aus den übereinander liegenden Formlingen (D1,RS,D2) eingelegt ist, und elektrisch mit dem Datenspeicherelement (LP) verbunden ist (L1,L2).

2. Datenspeichervorrichtung nach Anspruch 1, wobei das Gehäuse aus zwei annähernd formgleichen Schalen (G1,G2) besteht, welche aufeinander liegend unlösbar hermetisch dicht miteinander verbunden sind.

3. Datenspeichervorrichtung nach Anspruch 2, wobei die Schalen (G1,G2) an der Öffnungsseite überstehende Ränder (R) aufweisen, welche zum hermetischen Verschluß unlösbar miteinander verbunden sind (S), insbesondere verschweißt.

4. Datenspeichervorrichtung nach einem der vorangegangenen Ansprüche, wobei das Gehäuse aus einem weitgehend lösungsmittelbeständigen und bis zu einer Temperatur von ca. 230°C formbeständigen Kunststoff besteht, insbesondere aus Polyphenylensulfid ("PPS").

5. Datenspeichervorrichtung nach einem der vorangegangenen Ansprüche, wobei der Wärmedämmstoff der Formlinge (D1,RS,D2) eine mikroporöse Struktur aufweist und als ein Hauptbestandteil pyrogene Kieselsäure ("HDK") enthält.

6. Datenspeichervorrichtung nach einem der vorangegangenen Ansprüche, wobei das Gehäuse (G1,G2) eine zylindrische Form aufweist.

7. Datenspeichervorrichtung nach Anspruch 6, wobei
a) die außen liegenden Formlinge (D1,D2) die Gestalt von vollen Deckscheiben aufweisen, und
b) der innen liegende Formling (RS) die Gestalt einer Ringscheibe aufweist, deren Ringöffnung als ein Durchbruch zum Einlegen zumindest des elektronischen Datenspeicherelementes (LP) dient.

8. Datenspeichervorrichtung nach Anspruch 7, wobei
a) die außen liegenden Formlinge (D1,D2) auf den Oberseiten, welche dem innen liegenden Formling (RS) zugewandt sind, bevorzugt ringförmige Erhöhungen bzw. Vertiefungen (V12,V22) aufweisen,
b) der innen liegende Formling (RS) auf beiden Oberseiten jeweils zumindest eine bevorzugt ringförmige Vertiefung bzw. Erhöhung (AH1, AH2) aufweist, und
c) die bevorzugt ringförmigen Erhöhungen und Vertiefungen (V11,V21,RS) bei den in der Packung übereinander liegenden Formlingen (D1,RS,D2) derart ineinander greifen (V12, AH1 und V22, AH2), daß sich Verzahnungsbereiche (Z) bilden.

9. Datenspeichervorrichtung nach einem der Ansprüche 6, 7 oder 8, wobei die Sende- und/oder Empfangseinrichtung (A,L1,L2) im Bereich von zumindest einer kreisförmigen Stirnseite in das zylinderförmige Gehäuse (G1,G2) eingelegt ist.

10. Datenspeichervorrichtung nach Anspruch 9, wobei zumindest einer der außen liegenden Formlinge (D1,D2) auf der Oberseite, welche dem innen liegenden Formling (RS) abgewandt ist, jeweils eine weitere bevorzugt ringförmige Vertiefung (V11,V21) zur Aufnahme der Sende- und/oder Empfangseinrichtung (A,L1,L2) aufweist.

11. Datenspeichervorrichtung nach einem der vorangegangenen Ansprüche, wobei die Sende- und/oder Empfangseinrichtung (A,L1,L2) eine gewickelte Ferritantenne aufweist.

12. Datenspeichervorrichtung nach einem der vorangegangenen Ansprüche, wobei die elektrischen Verbindungen (L1,L2) zwischen Sende- und/oder Empfangseinrichtung (A) und dem Datenspeicherelement (LP) zwischen den Innenseiten des Gehäuses (G1,G2) und den Außenseiten der Packung der Formlinge (D1,RS,D2), und zwischen den Auflageseiten (V12, AH1 bzw. V22, AH2) von zumindest einem außen liegenden und dem innen liegenden Formling (D1,RS bzw. RS,D2) in der Packung verlegt sind.
